# EUROPEAN PATENT APPLICATION

(11) **EP 4 751 600 A1**
(43) Date of publication of application: **03.06.2026**
(21) Application number: 25214670.9
(22) Date of filing: 10.11.2025
(51) Int. Cl.: A43C 11/16

(54) **APPARATUS FOR FASTENING WIRE**

(30) Priority: 02.12.2024 KR 20240176935
(71) Applicant: Freelock Inc., Busan 46717 (KR)
(72) Inventor: HA, Min Woo, 46717 Busan (KR); OH, Ki Suk, 46717 Busan (KR)
(74) Representative: Bottino, Giovanni

(57) **Abstract**

An apparatus for fastening wire includes a housing, a spool positioned in the housing and configured to wind a wire, a dial cover rotatably mounted over the housing and providing an entry hole at a center thereof, and an operating unit including a fixing plate covering a top surface of the dial cover and maintaining limited rotation with respect to the housing, and a clutch mounted to be rotatable with respect to the fixing plate, wherein the dial cover maintains a fixed height with respect to the housing and the fixing plate maintains a fixed non-rotating state regardless of rotation of the dial cover.

## Description

### BACKGROUND

### Technical Field

The present disclosure relates to an apparatus for fastening wire, and more particularly, to an apparatus for fastening wire which can be mounted on shoes, clothes, hats, and other accessories to tighten or release a wire.

### Description of the Related Art

Strings or wires can generally be used for tightening and releasing shoes, clothes, hats, accessories, medical equipment, bags, sports equipment, and the like. Wire tightening apparatuses can be used to facilitate fastening and releasing of strings or wires.

The wire tightening apparatus disclosed in WO2014/197721 may include a housing, driving elements such as a spool and a pawl disc, a tension element such as a knob, and a shaft-mounting element mounted under the housing.

The wire tightening apparatus can selectively engage the pawl disc and the spool by moving up and down the knob. When the pawl disc and the spool are not engaged, the wire wound around the spool can be easily released, but when the pawl disc and the spool are engaged, the wire wound around the spool is not released. When the knob is turned in the locking direction with the pawl disc and the spool engaged, rotational force can be transmitted to the spool through the pawl disc, whereby the spool can be rotated in the winding direction of the wire.

In wire tightening apparatuses of the related art, a knob is moved directly up and down, and when the knob is moved down, in this state, the knob itself is also rotated to rotate the pawl disc and the spool. Further, since it is required to form a space inside a knob to accommodate a pawl disc, a spool, and the upper part of a housing, the knob configured to rotate could not be made small and thin.

Further, in some cases, a trademark of the wire tightening apparatus or the maker of the product to which the tightening apparatus is applied is represented on the top surface of knobs. However, since the knob must be necessarily rotated, it is difficult to display trademarks, which results in low commercial applicability. Further, since the apparatuses are formed with a large overall volume, they are difficult to harmonize with the surrounding design.

### SUMMARY

The present disclosure provides an apparatus for fastening wire that can maintain a fixed external appearance capable of harmonizing with the surrounding design despite rotation of the apparatus for fastening wire.

The present disclosure provides an apparatus for fastening wire of which a rotating dial or a knob can be formed to be thin and small and which can solve the problem of the entire apparatus for fastening wire becoming bulky.

The present disclosure provides an apparatus for fastening wire that provides strong resistance to contamination from the outside and allows easy partial cleaning.

According to an exemplary embodiment of the present disclosure for achieving the objectives of the present disclosure described above, an apparatus for fastening wire includes: a housing; a spool positioned in the housing and configured to wind a wire; a dial cover rotatably mounted over the housing and providing an entry hole at a center thereof; and an operating unit including a fixing plate covering a top surface of the dial cover and maintaining limited rotation with respect to the housing, and a clutch mounted to be rotatable with respect to the fixing plate, wherein the dial cover maintains a fixed height with respect to the housing and the fixing plate maintains a fixed non-rotating state regardless of rotation of the dial cover.

Since the fixing plate of the operating unit covers the top surface of the dial cover and maintains the non-rotating state, it is possible to maintain the design consistency of the object on which the apparatus is mounted, and the dial cover can be fixed, whereby the overall thickness can be made small.

The fixing plate partially exposes a portion of the dial cover, whereby a user can grip the side of the dial cover and rotating the dial cover in a locking direction. The fixing plate at least one extended arm that accommodates a side of the dial cover in contact with a side of the housing, and an end of the arm is retained by the side of the housing so that the fixing plate can be maintain the non-rotating state even though the dial cover is rotated.

In correspondence to the arm of the fixing plate, a retaining groove for retaining the end of the arm may be formed on the side of the housing, and the retaining groove may be formed vertically so that the end of the arm can be vertically moved.

The operating unit includes a central shaft integrally formed with the fixing plate and the clutch can be rotated around the central shaft. Hooks that can fix the clutch may be formed on the bottom surface of the fixing plate, and the clutch is rotatably fixed to the fixing plate, so it can be moved up and down together with the fixing plate.

The central shaft may include a central slit formed along an axial direction thereof and passing protrusions formed outwardly from a lower portion of the central shaft. The spool may include a central hole through which the central shaft passes, and the central hole may have a shape and dimensions to pass the lower portion of the central shaft only when the protrusions are compressed by virtue of the central slit.

The clutch is mounted to move up and down together with the fixing plate, but to be rotatably through the central axis, so it can be rotated together with the dial cover. The clutch can transmit rotation of the dial cover with the clutch and the spool engaged with each other, and the clutch can be engaged with and disengaged from the spool while moving up and down together with the fixing plate.

To this end, at least one guide protrusion may be formed on an inner side of the entry hole of the dial cover, and at least one or more guide grooves vertically parallel to each other may be formed on an outer surface of the clutch to correspond to the guide protrusion of the entry hole. Of course, forming a guide groove on the dial cover and forming a guide protrusion on the outer surface of the clutch to correspond to it may be included in the present disclosure.

The dial cover may include a pawl disc mounted on a bottom surface thereof and the pawl disc may include a ring body formed around the entry hole and pawl blades spirally extending from the ring body. The pawl blades may extend outward from the ring body like a cantilever, and ends of the pawl blades may be engaged with a housing gear formed on an inner surface of the housing. The pawl disc allows the dial cove to rotate in one direction with respect to the housing and may restrict or prevent rotation in the opposite direction.

The guide protrusion may be formed directly on the dial cover, but when the pawl disc is formed, the guide protrusion may be formed on the ring body. Even though it is required to form the guide groove on the dial cover, the guide groove may be formed directly on the dial cover, but when the pawl disc is formed, the guide groove may be formed on the ring body.

The operating unit may be positioned over the spool and moved up and down, and may be selectively moved up or down with respect to the spool by interaction between passing protrusions and a center hole. When the center hole is expanded, the operating unit may be temporarily fixed after moving up or down.

While the fixing plate is in the non-rotating state, the clutch may be rotated together with the dial cover. To this end, a protrusion or a groove may be formed on the inner side of the entry hole, and a groove or a protrusion may be formed on the outer surface of the clutch to correspond to the protrusion or the groove of the entry hole.

A pawl disc may be mounted on the bottom surface of the dial cover. The pawl disc may include a plurality of pawl blades, and the pawl blades may be engaged with a housing gear formed on the inner side of the housing.

The housing may include a cylindrical body accommodating the spool and a bottom unit mounted on the lower portion of the cylindrical body, the cylindrical body may be open at a lower portion, and a coupling flange for fixing the apparatus for fastening wire to the surroundings may be formed on an edge of a lower end of the bottom unit.

The apparatus may include a supporting ledge protruding inward from a lower end of the housing, and the spool may be maintained at a predetermined depth by the supporting ledge.

According to another exemplary embodiment of the present disclosure, an apparatus for fastening wire may include: a housing accommodating a spool; a dial cover maintaining a fixed height without moving up and down with respect to the housing; a fixing plate covering the dial cover and maintaining a non-rotating state with respect to the housing; and a clutch selectively transmitting rotation of the dial cover to the spool.

In the related art, a pawl disc functioning as a clutch is mounted on the bottom surface of a knob, and even though the knob is moved up while accommodating the pawl disc, the knob is excessively bulky because the upper end of the housing needs to be accommodated.

In addition, since the pawl disc may need to temporarily disengage from the housing gear while moving up and down, there the pawl blades may be damaged as they return to their original position. To prevent this, the resistance of the pawl blades may need to be limited, or they may slip idly.

However, since the dial cover according to this embodiment maintains a fixed height, the height can be kept compact and appropriate, and the overall size of the apparatus for fastening wire can also be reduced.

The clutch may be moved up and down together with the fixing plate and rotated together with the dial cover. To this end, a clutch gear is formed on a bottom surface of the clutch, a spool gear engaging with the clutch gear is formed on a top surface of the spool, at least one guide protrusion may be formed on an inner side of the entry hole of the dial cover, and at least one or more guide grooves vertically parallel to each other may be formed on an outer surface of the clutch to correspond to the guide protrusion of the entry hole.

Further, according to another exemplary embodiment of the present disclosure, an apparatus for fastening wire may include: a housing accommodating a spool; a dial cover rotating with respect to the housing; a pawl disc mounted on the dial cover to rotate together with the dial cover, and always keeping engaged with a housing gear formed on an inner side of the housing such that the dial cover is rotated in one direction with respect to the housing; and a fixing plate maintaining a non-rotating state with respect to the housing.

The apparatus for fastening wire of the present disclosure can maintain a fixed external appearance that can harmonize with the surrounding design despite rotation of the dial for tightening, and can maintain a design that can harmonize with surrounding design particularly in clothes or fashion accessories that are sensitive to the external appearance.

According to the apparatus for fastening wire of the present disclosure, it is possible not only to reduce the number of components, but also to allow the rotating dial or knob to be made thin and small, and it is possible to solve the problem of the entire apparatus for fastening wire becoming bulky.

According to the apparatus for fastening wire of the present disclosure, it is possible blocks the inflow of external contaminants or foreign substances, and easily clean the apparatus even if contamination occurs.

### BRIEF DESCRIPTION OF THE DRAWINGS

FIG. 1 is a diagram for describing an apparatus for fastening wire according to an embodiment of the present disclosure;
FIG. 2 is a diagram for describing a usage example in which the apparatus for fastening wire of FIG. 1 is applied to a shoe;
FIG. 3 is a diagram for describing the coupling structure and components of the apparatus for fastening wire of FIG. 1;
FIG. 4 is a diagram for specifically describing a dial cover and an operating unit of the apparatus for fastening wire of FIG. 1;
FIG. 5 is a diagram for describing the A-A cross-section of FIG. 1;
FIG. 6 is a diagram for describing an apparatus for fastening wire according to an embodiment of the present disclosure; and
FIG. 7 is a diagram for describing the coupling structure and components of the apparatus for fastening wire of FIG. 6.

### DETAILED DESCRIPTION

Hereafter, preferred embodiments of the present disclosure will be described in detail with reference to the accompanying drawings, but the present disclosure is not limited or restricted to the embodiments. For reference, the same reference numerals substantially indicate the same components in the description, it is possible to refer to the matters shown in other figures under this rule, and matters that are determined as being apparent or repetitive to those skilled in the art may be omitted.

For example, in the following embodiments, a case in which the apparatus for fastening wire is mounted at the center of a shoe, but the apparatus for fastening wire can also be applied to other positions of the shoe, and in addition to shoes, it can be used in various devices or locations requiring fastening, such as clothes, sporting goods, hats, bags, medical equipment, and protective gears.

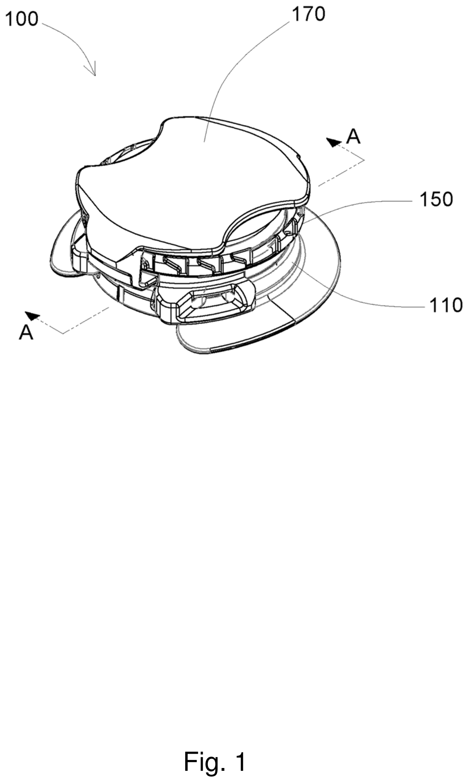

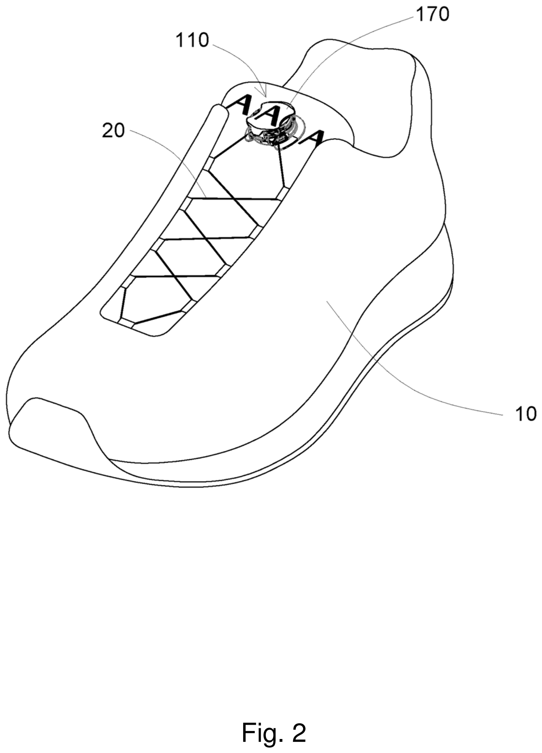

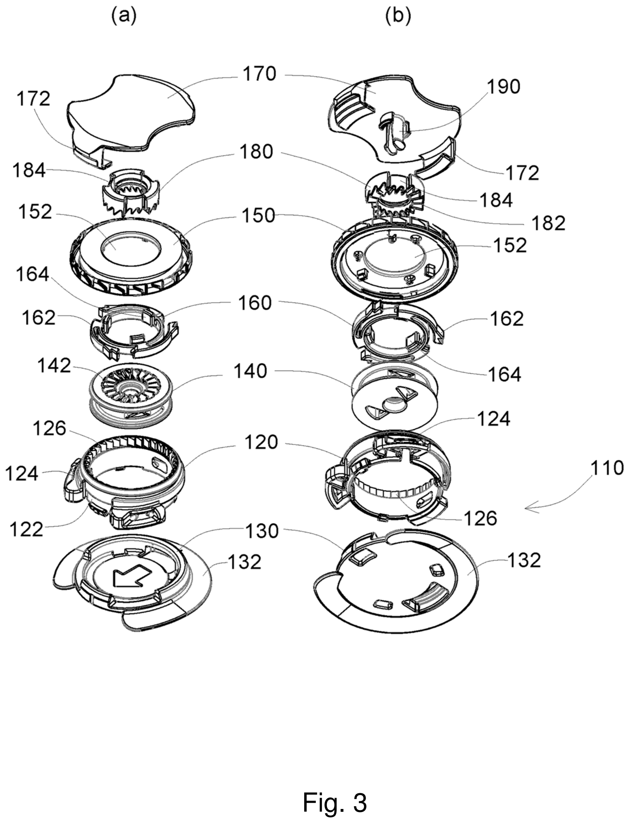

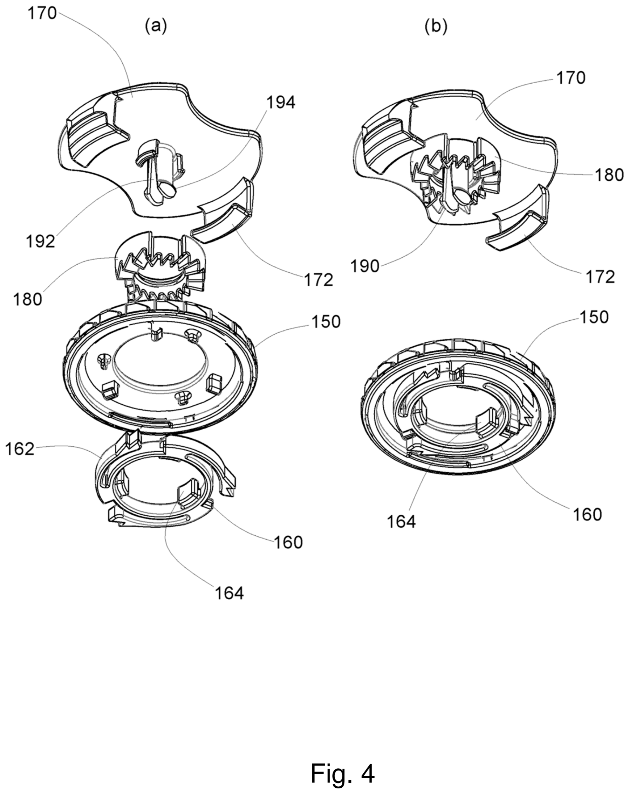

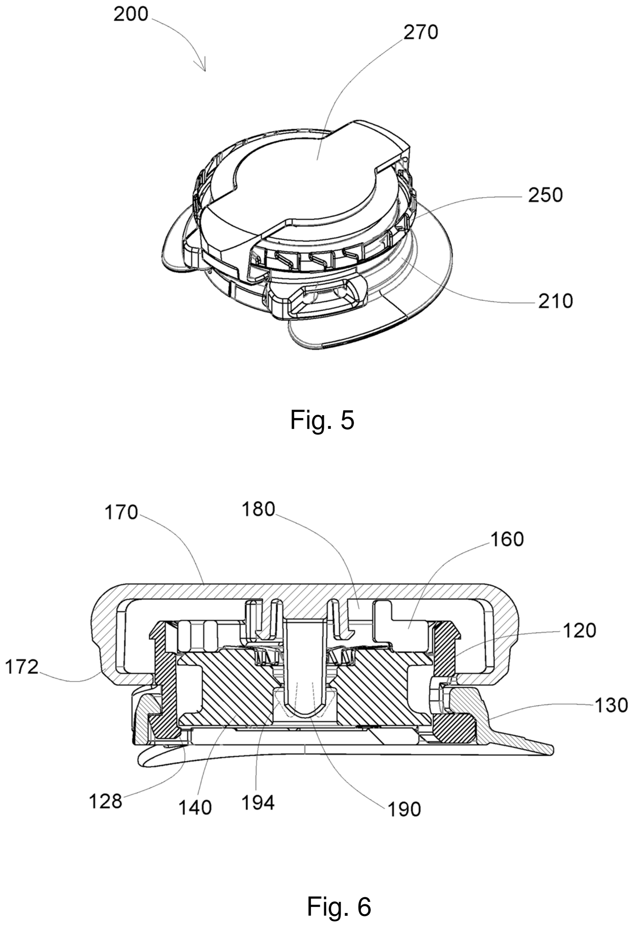

FIG. 1 is a diagram for describing an apparatus for fastening wire according to an embodiment of the present disclosure, FIG. 2 is a diagram for describing a usage example in which the apparatus for fastening wire of FIG. 1 is applied to a shoe, FIG. 3 is a diagram for describing the coupling structure and components of the apparatus for fastening wire of FIG. 1, FIG. 4 is a diagram for specifically describing a dial cover and an operating unit of the apparatus for fastening wire of FIG. 1, and FIG. 5 is a diagram for describing the A-A cross-section of FIG. 1.

Referring to FIGS. 1 to 5, an apparatus 100 for fastening wire according to this embodiment may include a housing 110, a spool 140, a dial cover 150, a clutch 180, and a fixing plate 170. The housing 110 can fix the apparatus 100 for fastening wire at a specific position of a shoe 10, and the dial cover 150 can maintain a fixed height with respect to the housing 110. Further, the clutch 180 and the fixing plate 170, as an operating unit, can control engagement and disengagement between the dial cover 150 and the spool 140 by moving up and down with respect to the housing 110 and the dial cover 150.

As shown in FIG. 2, the apparatus 100 for fastening wire according to this embodiment is mounted on one side of the shoe 10 and can adjust tightness of the shoe 10 by tightening or releasing a wire 20. In particular, the fixing plate 170 is positioned over the dial cover 150 and can maintain a fixed non-rotating state with respect to the housing 110.

The fixing plate 170 is positioned at the top of the apparatus 100 for fastening wire and maintains a non-rotating state, it is possible to maintain consistency of the external appearance design of the shoe 10. For example, assuming that the trademark of the shoe 10 is "AAA", it is possible to prevent damage to the overall brand image by representing the middle "A" also on the top surface of the apparatus 100 for fastening wire.

In the wire tightening apparatuses of the related art, since the knob at the top is rotated, it was difficult to represent a trademark or design that could harmonize with the surroundings on the outer surface of the knob, and only the wire tightening apparatuses were sometimes mounted separately from the surroundings, which causes disruption to consistency of the product design.

The structure of the apparatus 100 for fastening wire for achieving this can be seen in FIG. 3. FIGS. 3(a) and 3(b) show the disassembled state of the overall components seen from above and below, respectively.

The housing 110 includes a cylindrical body 120 and a bottom unit 130, and can accommodate a spool 140 therein. The spool 140 has a structure capable of winding the wire 20 or the like, and the wire 20, which is connected into the inside of the housing 110 through a wire inlet 124 of the housing 110, can be wound around the outer surface of the spool 140.

The bottom unit 130 is coupled to the lower portion of the cylindrical body 120, and has a coupling flange 132 along its edge, whereby the apparatus 100 for fastening wire can be fixed to a product such as the shoe 10 through various methods such as sewing or adhesion.

In this embodiment, the housing 110 is formed by assembling two components, that is, the cylindrical body 120 and the bottom unit 130. However, depending on cases, the housing 110 may be provided be composed of a single component or three or more components accommodating the spool 140.

The spool 140 can be accommodated in the housing 110. The spool 140 can freely rotate in the housing 110, the wire can be wound around the outer surface of the spool 140, a spool gear 142 can be formed on the top surface of the spool 140. The spool gear 142 may be formed on the top surface around the central hole of the spool 140 and may have a ratchet shape or another gear shape. As will be described below, the spool gear 142 can engage with a clutch gear 182 of the clutch 180, and can transmit rotation of the dial cover 150 to the spool 140 through the clutch 180.

The dial cover 150 can be rotated while maintaining a fixed height at the upper portion of the housing 110. To this end, a protrusion that protrudes outward from the upper end of the cylindrical body 120 may be formed. However, this is intended to maintain the height of the dial cover 150, and is different from limiting the upper limit of the vertical movement range of the dial cover 150.

The dial cover 150 includes a protrusion that protrudes from its bottom surface, and a pawl disc 160 can be fixed to the protrusion. The pawl disc 160 may be provided in a hollow form corresponding to an entry hole 152 formed at the center of the dial cover 150, and may include a plurality of pawl blades 162 spirally extending around the hollow ring-shaped body. The ends of the pawl blades 162 may be formed in the shape of a latch or a pawl and may engage with a housing gear 126 formed on the upper inner surface of the cylindrical body 120.

Since the pawl disc 160 is integrally fixed to the dial cover 150, the dial cover 150 can be easily rotated with respect to the housing 110 in the direction allowed by the pawl disc 160, but is prevented or restricted from rotating in the opposite direction. Depending on cases, rotation in the opposite direction may accompanied by damage or deformation of the pawl blades 162.

Since the pawl disc 160 is mounted on the bottom surface of the dial cover 150, the pawl disc 160 can also maintain a fixed height with respect to the housing 110.

In this embodiment, the pawl blades 162 of the pawl disc 160 are integrally formed around the ring body, but, depending on cases, the pawl blades may be mounted separately on the bottom surface of the dial cover and may be formed in various structures other than a cantilever shape for one-way rotation.

A plurality of guide protrusions 164 is formed on the inner side of the ring body of the pawl disc 160, and the guide protrusions 164 can engage with guide grooves 184 of the clutch 180. It is possible to move the clutch 180 up and down with respect to the dial cover 150 using the engagement between the guide protrusions 164 and the guide grooves 184, and even though the fixing plate 170 and the clutch 180 of the operating unit are moved up and down, the dial cover 150 and the pawl disc 160 can maintain engagement with the clutch 180.

Unless the spool gear 142 and the clutch gear 182 are securely engaged by upward movement of the clutch 180, rotation of the dial cover 150 may be transmitted only up to the clutch 180 and fail to be transmitted to the spool 140, which may mean that the spool 140 can be rotated in the housing 110 in the unwinding direction of the wire 20.

The clutch 180 can be positioned in the entry hole 152 of the dial cover 150 and can be moved up and down over the dial cover 150 together with the fixing plate 170. To this end, the fixing plate 170 may include at least one extending arm 172 that accommodates the side of the dial cover 150 in contact with the side of the housing 110.

In this embodiment, a retaining groove 122 may be formed on the side of the housing 110, and the end of the arm 172 of the fixing plate 170 can be retained in the retaining groove 122. Therefore, even though the dial cover 150 is rotated, the fixing plate 170 can maintain a fixed non-rotating state having limited rotation with respect to the housing 110.

The retaining groove 122 may be formed vertically such that it does not interfere with the vertical movement of the arm 172 when the fixing plate 170 is vertically moved, and in this embodiment, the retaining groove is formed on the side of the cylindrical body 120, but alternatively, it may be formed on the bottom unit or at the boundary between the cylindrical body and the bottom unit.

A central shaft 190 is formed on the bottom surface of the fixing plate 170, and mounting hooks for mounting the clutch 180 may be formed around the central shaft. When coupled to the mounting hooks, the clutch 180 can be rotatably mounted on the bottom surface of the fixing plate 170, and even though the clutch 180 is rotated together with the dial cover 150, it may not forcibly transmit the rotation to the fixing plate 170.

As shown in FIG. 4, the central shaft 190 may be integrally formed at the center of the bottom surface of the fixing plate 170, serve as the rotational center of the clutch 180, and extend to the center hole of the spool 140.

The central shaft 190 may include a central slit 192 formed along the axial direction and passing protrusions 194 formed outwardly from the lower portion of the central shaft 190. A bottleneck section of which the inner diameter decreases and then increases may be formed on the inner surface of the center hole of the spool 140, and the lower end of the central shaft 190 can pass through the bottleneck section of the center hole by the interaction of the central slit 192 and the passing protrusions 194.

The central shaft 190 is formed downward from the bottom surface of the fixing plate 170, and when the fixing plate 170 at the uppermost end is moved downward, the passing protrusion 194 is positioned below the bottleneck section, so the clutch 180 can be temporarily fixed by pressing against the spool 140. Further, when the fixing plate 170 is moved upward, the passing protrusions 194 are also positioned over the bottleneck section, whereby rotational transmission between the clutch 180 and the spool 140 can be restricted.

The operating unit including the fixing plate 170 and the clutch 180 is positioned over the spool 140 and the dial cover 150 and can be moved up and down, and can be elastically or semi-automatically moved up or down with respect to the spool 140 by the interaction between the passing protrusions 194 and the center hole. Since the operating unit is positioned outside the dial cover 150, the internal structure can be designed to be compact, and since the fixing plate 170 is positioned outside and maintains a non-rotating state, the apparatus for fastening wire can be made to harmonize with shoes or the surroundings of objects where it is mounted.

Referring to FIG. 5, the apparatus may include a supporting ledge 128 protruding inward from the lower end of the cylindrical body 120. The supporting ledge 128 may be formed over the entire or a portion of lower end of the cylindrical body 120, and when the spool 140 is assembled, the supporting ledge 128 enables the spool 140 to maintain a predetermined height without being inserted beyond a predetermined depth.

Even through the lower portion of the cylindrical body 120 is open, the spool 140 can be supported by the supporting ledge 128 so that rotation of the spool 140 is not hindered due to full surface contact.

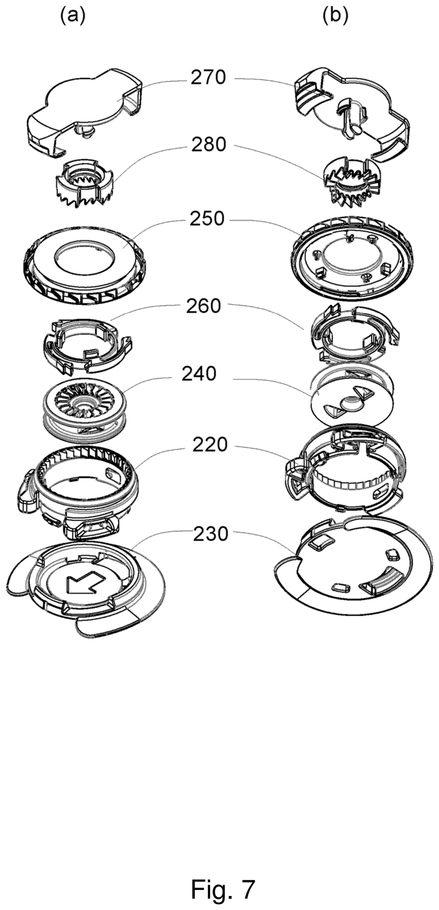

FIG. 6 is a diagram for describing an apparatus for fastening wire according to an embodiment of the present disclosure and FIG. 7 is a diagram for describing the coupling structure and components of the apparatus for fastening wire of FIG. 6.

Referring to FIGS. 6 and 7, an apparatus 200 for fastening wire according to this embodiment may include a housing 210, a spool 240, a dial cover 250, a clutch 280, and a fixing plate 270. For reference, the fixing plate 270 in this embodiment may be formed in a shape different from that of the previous embodiment, and other descriptions may refer to the corresponding descriptions of the previous embodiment.

The apparatus 200 for fastening wire according to this embodiment is mounted on one side of a shoe or the like and can adjust tightening of the shoe or the like by tightening or loosening a wire, and, by slightly reducing the size of the fixing plate 270 and increasing the exposed area of the dial cover 250, a user can more comfortably grip the dial cover. Of course, it is also possible to use fixing plates of various shapes for this purpose.

The structure of the apparatus 200 for fastening wire can be seen from FIGS. 3(a) and 3(b), which show the disassembled state of the apparatus 200 for fastening wire seen from above and below, respectively. As shown in FIG. 3, structures and operations other than the fixing plate 270 may refer to the descriptions of the previous embodiment.

Although exemplary embodiments of the present disclosure were described above with reference to the drawings, those skilled in the art could understand that the present disclosure may be changed and modified in various ways without departing from the spirit and scope of the present disclosure described in claims.

## Claims

1. An apparatus for fastening wire, comprising:
a housing;
a spool positioned in the housing and configured to wind a wire;
a dial cover rotatably mounted over the housing and providing an entry hole at a center thereof; and
an operating unit including a fixing plate covering a top surface of the dial cover and maintaining limited rotation with respect to the housing, and a clutch mounted to be rotatable with respect to the fixing plate,
wherein the dial cover maintains a fixed height with respect to the housing and the fixing plate maintains a fixed non-rotating state regardless of rotation of the dial cover.

2. The apparatus of claim 1, wherein the fixing plate partially exposes a portion of the dial cover.

3. The apparatus of claim 2, wherein the fixing plate at least one extended arm that accommodates a side of the dial cover in contact with a side of the housing, and an end of the arm is retained by the side of the housing.

4. The apparatus of claim 3, wherein a retaining groove for retaining the end of the arm is vertically formed on the side of the housing, and the retaining groove guides vertical movement of the operating unit.

5. The apparatus of claim 1, wherein the operating unit includes a central shaft integrally formed with the fixing plate, and the clutch is rotated around the central shaft and moved up and down together with the fixing plate.

6. The apparatus of claim 5, wherein the central shaft includes a central slit formed along an axial direction thereof and passing protrusions formed outwardly from a lower portion of the central shaft,
the spool includes a central hole through which the central shaft passes, and the central hole has a shape and dimensions to pass the lower portion of the central shaft only when the protrusions are compressed by virtue of the central slit, and
the operating unit is positioned over the spool and is selectively moved vertically and temporarily fixed by interaction between the passing protrusions and the central hole.

7. The apparatus of claim 5, wherein the clutch is rotated together with the dial cover.

8. The apparatus of claim 7, wherein at least one guide protrusion is formed on an inner side of the entry hole of the dial cover, and at least one or more guide grooves vertically parallel to each other are formed on an outer surface of the clutch to correspond to the guide protrusion of the entry hole.

9. The apparatus of claim 8, wherein the dial cover includes a pawl disc mounted on a bottom surface thereof, the pawl disc includes a ring body formed around the entry hole and pawl blades spirally extending from the ring body, ends of the pawl blades are engaged with a housing gear formed on an inner surface of the housing, and the pawl disc allows the dial cove to rotate in one direction with respect to the housing; and
the guide protrusion is formed on the ring body.

10. The apparatus of claim 7, wherein at least one guide groove is formed on an inner side of the entry hole of the dial cover, and at least one or more guide protrusions vertically parallel to each other are formed on an outer surface of the clutch to correspond to the guide groove of the entry hole.

11. The apparatus of claim 10, wherein the dial cover includes a pawl disc mounted on a bottom surface thereof, the pawl disc includes a ring body formed around the entry hole and pawl blades spirally extending from the ring body, ends of the pawl blades are engaged with a housing gear formed on an inner surface of the housing, and the pawl disc allows the dial cove to rotate in one direction with respect to the housing; and
the guide groove is formed on the ring body.

12. The apparatus of claim 1, wherein the clutch is rotated together with the dial cover while the fixing plate is in the non-rotating state.

13. The apparatus of claim 12, wherein a protrusion or a groove is formed on an inner side of the entry hole, and a groove or a protrusion is formed on an outer surface of the clutch to correspond to the protrusion or the groove of the entry hole.

14. The apparatus of claim 1, wherein the apparatus includes a supporting ledge protruding inward from a lower end of the housing, and the spool is maintained at a predetermined depth by the supporting ledge.

15. The apparatus of claim 1, wherein the housing includes a cylindrical body accommodating the spool and a bottom unit mounted on a lower portion of the cylindrical body, and the cylindrical body is open at a lower portion, and a coupling flange is formed on an edge of a lower end of the bottom unit.
